# EUROPÄISCHE PATENTSCHRIFT

(11) **EP 2 888 501 B1**
(45) Veröffentlichungstag und Bekanntmachung des Hinweises auf die Patenterteilung: **19.10.2016**
(21) Anmeldenummer: 13753612.4
(22) Anmeldetag: 22.08.2013
(51) Int. Cl.: F16D 65/097

(54) **SCHEIBENBREMSE FÜR EIN KRAFTFAHRZEUG MIT PLASTISCH DEFORMIERBARER RÜCKSTELLFEDER UND RÜCKSTELLFEDER**
DISC BRAKE FOR A MOTOR VEHICLE, COMPRISING A PLASTICALLY DEFORMABLE RESTORING SPRING, AND RESTORING SPRING
FREIN À DISQUES POUR UN VÉHICULE AUTOMOBILE POURVU D'UN RESSORT DE RAPPEL PLASTIQUEMENT DÉFORMABLE ET RESSORT DE RAPPEL

(30) Priorität: 23.08.2012 DE 102012016737
(43) Veröffentlichungstag der Anmeldung: 01.07.2015
(60) Teilanmeldung: 15002584.9
(73) Patentinhaber: Lucas Automotive GmbH, 56070 Koblenz (DE)
(72) Erfinder: MALLMANN, Markus, 56291 Pfalzfeld (DE)
(74) Vertreter: Thum, Bernhard
(86) Internationale Anmeldenummer: PCT/EP2013/067451
(87) Internationale Veröffentlichungsnummer: WO 2014/029840

(56) Entgegenhaltungen:
- DE-A1- 3 538 320
- GB-A- 854 813
- US-A- 5 251 727
- US-A1- 2011 168 503

## Beschreibung

Die vorliegende Erfindung betrifft eine Scheibenbremse für eine Kraftfahrzeugbremsanlage mit einem Bremsträger, der wenigstens einen Aufnahmebereich aufweist, eine Bremsbelaganordnung, die einen Bremsbelagträger und einen an dem Bremsbelagträger angebrachten Bremsbelag aufweist, der zum Erzielen einer Bremswirkung mit einer Bremsscheibe in Wechselwirkung bringbar ist, wobei die Bremsbelaganordnung über einen am Bremsbelagträger ausgebildeten Führungsabschnitt in dem wenigstens einen Aufnahmebereich geführt aufgenommen ist, und wenigstens eine Rückstellfeder, die an der Bremsbelaganordnung angreift und die Bremsbelaganordnung unter elastischer Deformation in eine bremswirkungsfreie Ausgangsstellung vorspannt, wobei die wenigstens eine Rückstellfeder zur Kompensation von Bremsbelagverschleiß plastisch deformierbar ist.

Derartige Scheibenbremsen sind aus dem Stand der Technik bekannt (z.B aus der US-A-2011/168503). Dabei ist es erforderlich, den Bremsbelagträger nach einer bremswirksamen Auslenkung aus seiner Ausgangsstellung, bei der er in Reibkontakt mit einer Bremsscheibe gelangt, wieder in die Ausgangsstellung zurück zu bewegen, um den Bremsbelag von der Bremsscheibe zu lösen. Zur Vermeidung von unnötigem Verschleiß und zur Reduzierung des Verbrauchs soll unbedingt vermieden werden, dass nach einer bremswirksamen Auslenkung der Bremsbelaganordnung ein Kontakt zwischen Bremsbelag und Bremsscheibe bestehen bleibt und Restschleifmomente auftreten.

Allerdings ist es erforderlich, wie ebenfalls allgemein bekannt, die Scheibenbremse so auszugestalten, dass bei Auftreten von Verschleiß an den Bremsbelägen eine Verschleißnachstellung erfolgen kann, damit trotz des auftretenden Belagverschleißes das Verhalten der Scheibenbremse bei einer Betätigung im Wesentlichen unverändert bleibt. Eine derartige Verschleißnachstellung erfordert es, dass die Rückstellfeder gemäß dem Verschleiß eingestellt wird. Hierzu gibt es Lösungen, bei denen im Aufnahmebereich die Rückstellfeder gemäß der aktuellen Verschleißsituation nachrutschen kann. Andere Lösungen sehen vor, dass sich die Rückstellfeder gemäß dem aktuellen Verschleiß im Aufnahmebereich deformiert, insbesondere plastisch deformiert. Eine derartige Lösung ist beispielsweise in dem Dokument US 7,318,503 B2 beschrieben. Dabei wird die Bremsbelaganordnung über eine schleifenförmige Rückstellfeder in ihre Ausgangsstellung vorgespannt, wobei die schleifenförmige Rückstellfeder dazu ausgebildet ist, mit einem plastischen Deformationsanteil auch eine Belagverschleißkompensation zu gewährleisten.

Es hat sich aber gezeigt, dass derartige Lösungen kein verlässliches Verhalten bei der Verschleißkompensation zeigen. Insbesondere lässt sich schwer vorhersagen, ob eine plastische Deformation des Federbogens immer genau dem aktuellen Verschleißzustand entspricht. Dies hat zur Folge, dass sich bei fortschreitendem Bremsbelagverschleiß in der Praxis auch das Rückstellverhalten der Rückstellfeder ändern kann. Dies kann darin resultieren, dass die Feder beispielsweise zu stark plastisch deformiert wird, so dass der verbleibende elastische Deformationsanteil keine ausreichende Rückstellbewegung mehr bereitstellt und es zu Restschleifmomenten kommt. Anderenfalls ist es ebenfalls möglich, dass sich die Feder nicht hinreichend plastisch deformiert, so dass sie einen größeren Rückstellweg vorsieht, als dies erwünscht ist. Dies führt zu einem verzögerten Ansprechverhalten der Bremse bei erneuter Betätigung.

Es ist demgegenüber eine Aufgabe der vorliegenden Erfindung, eine Scheibenbremse der eingangs bezeichneten Art bereitzustellen, deren Rückstellfeder eine zuverlässigere Verschleißkompensation bei gleichbleibendem Rückstellverhalten vorsieht.

Diese Aufgabe wird durch eine Scheibenbremse gemäß Anspruch 1 gelöst.

Anstelle eines harmonisch rund geformten Federbogens sieht die Erfindung vor, im Verbindungsbereich einen Solldeformationsabschnitt bereitzustellen, in dem die plastische Deformation zur Verschleißnachstellung erfolgt. Dadurch lässt sich das plastische Deformationsverhalten definierter einstellen.

Eine Weiterbildung der Erfindung vor, dass die Rückstellfeder mit wenigstens zwei im Winkel zueinander angeordneten Schenkeln ausgebildet ist, wobei sich bei zunehmendem Belagverschleiß zur Verschleißkompensation der Winkel zwischen den beiden Schenkeln ändert.

Die Verschleißkompensation unter plastischer Deformation der Rückstellfeder findet also in dem wenigstens einen Verbindungsbereich zwischen Basisabschnitt und dem wenigstens einen Schenkel statt bzw. - im Falle von wenigstens zwei Schenkeln - zusätzlich oder alternativ im Verbindungsbereich zwischen den zwei benachbarten Schenkeln, wobei diese Verbindungsbereiche klar definiert sind. Dadurch lässt sich bei geeigneter Ausgestaltung der Verbindungsbereiche, worauf im Folgenden im Detail noch eingegangen wird, das Deformationsverhalten der Feder zur Verschleißkompensation gezielt und zuverlässig einstellen.

Erfindungsgemäß ist vorgesehen, dass die Rückstellfeder derart zwischen dem Bremsträger und der Bremsbelaganordnung angeordnet sind, dass sie auf Druck belastet wird, wobei sich bei zunehmendem Bremsbelagverschleiß der Winkel zwischen dem wenigstens einen Schenkel und dem Basisabschnitt unter plastischer Deformation vergrößert. Sind zwei benachbarte Schenkel vorgesehen, so verkleinert sich der Winkel zwischen ihnen unter plastischer Deformation und die benachbarten Schenkel nähern sich einander an. Diese Variante der druckelastischen Feder hat den Vorteil, dass sich die benachbarten Schenkel unter zunehmender Verschleißkompensation einander annähern und schließlich bei maximaler Deformation (plastisch und elastisch) aneinander anlegen. Bei Freigabe der Bremse kommt es zu einer Rückstellbewegung im Umfang des elastischen Deformationsanteils. Der plastische (bleibende) Deformationsanteil dient der Verschleißkompensation.

Eine Weiterbildung der Erfindung sieht vor, dass die Rückstellfeder in den Verbindungsbereichen zwischen zwei benachbarten Schenkeln oder zwischen dem wenigstens einen Schenkel und dem Basisabschnitt sowie nahe diesen Verbindungsbereichen jeweils mit einer Ausnehmung versehen ist, wobei die Schenkel entfernt von den Verbindungsbereichen ausnehmungsfrei gestaltet sind. Durch geeignete Dimensionierung der Länge oder/und Breite der Ausnehmung in den Verbindungsbereichen lässt sich das Deformationsverhalten in diesen Verbindungsbereichen gezielt steuern. Größere Ausnehmungen sorgen für eine stärkere Schwächung der Verbindungsbereiche und damit für eine niedrigere Deformationsgrenze. Unter Deformationsgrenze wird in diesem Zusammenhang der Übergang von einem Zustand elastischer Deformation zu einem Zustand plastischer Deformation verstanden. Kleinere Ausnehmungen sorgen für eine höher liegende Deformationsgrenze, d.h. dass größere Kräfte erforderlich sind, um eine plastische Deformation in einem Verbindungsbereich zu erhalten. Die Ausbildung der Verbindungsbereiche mit Ausnehmungen hat den weiteren Vorteil, dass so eine gezielte Einstellung des Deformationsverhaltens unter geringem fertigungstechnischem Aufwand erfolgen kann. Zusammenfassend ist es also möglich, dass die gewünschte Deformationsgrenze eines Verbindungsbereichs zwischen elastischer und plastischer Verformung durch Dimensionierung Größe der Ausnehmung im Verbindungsbereich bestimmbar ist.

Hinsichtlich der konstruktiven Ausgestaltung der Rückstellfeder kann vorgesehen sein, dass der Verbindungsbereich des mit dem Basisabschnitt verbundenen Schenkels eine andere Deformationsgrenze aufweist als der Verbindungsbereich zwischen benachbarten Schenkeln. Der dem Basisabschnitt nahe Schenkel verformt sich also sozusagen gegenüber dem vom Basisabschnitt weiter entfernten Schenkel später plastisch.

In diesem Zusammenhang kann ferner vorgesehen sein, dass die Verbindungsbereiche zwischen benachbarten Schenkeln mit zunehmendem Abstand vom Basisabschnitt mit betragsmäßig ungleicher, vorzugsweise betragsmäßig abnehmender, Deformationsgrenze ausgebildet sind. Es ist aber auch möglich, alternierende Deformationsgrenzen in aufeinanderfolgenden Verbindungsbereichen vorzusehen.

Ferner kann hinsichtlich der Struktur der Rückstellfeder vorgesehen sein, dass der wenigstens eine Verbindungsbereich im Wesentlichen harmonisch gerundet ausgebildet ist, wenn auch mit kleinem Radius. Die harmonische Rundung verhindert einen unerwünschten Bruch der Rückstellfeder und garantiert eine lange Lebensdauer. Zudem kann vorgesehen sein, dass die Schenkel im Wesentlichen geradlinig ausgebildet sind.

Erfindungsgemäß ist es grundsätzlich möglich, dass die Rückstellfeder als separates Bauteil ausgebildet und relativ zum Bremsträger, vorzugsweise über eine Rastverbindung oder eine Clip-Verbindung festlegbar ist. Dies erlaubt eine einfache Herstellung als Stanzbiegeteil aus einem Federblech oder dergleichen. Es ist aber auch möglich, dass die Rückstellfeder an einer Führungsklammer zur Führung des Bremsbelagträgers angebracht ist, die in dem Aufnahmebereich aufgenommen ist. In diesem Zusammenhang kann vorgesehen sein, dass die Rückstellfeder an der Führungsklammer über eine Rastverbindung verrastet und/oder verklemmt ist, wobei die Führungsklammer hierfür eine Ausnehmung aufweist. Alternativ ist es möglich, dass die Rückstellfeder an der Führungsklammer einstückig angeformt ist. Dadurch wird die Handhabung von Rückstellfeder und Führungsklammer als eine Einheit bei der Montage und der Logistik vereinfacht.

In diesem Zusammenhang kann ferner erfindungsgemäß vorgesehen sein, dass die Einheit aus Rückstellfeder und Führungsklammer durch Umformen eines ebenen Bauteils hergestellt wird, wobei die Rückstellfeder und die Führungsklammer jeweils durch Umformen eines im ebenen Zustand im Wesentlichen länglichen Abschnittes des ebenen Bauteils hergestellt werden, wobei die jeweiligen Längsachsen der länglichen Abschnitte im Wesentlichen parallel zueinander verlaufen. Als ebenes Bauteil kommt vorzugsweise ein Metallblech in Frage, das im Rahmen von Schneid- oder Stanzprozessen mit gewünschten Konturen und Ausnehmungen versehen wird und das anschließend im Rahmen von Biegeprozessen umgeformt wird. Durch das erfindungsgemäße Ausbilden von Rückstellfeder und Führungsklammer als längliche Abschnitte des ebenen Bauteils und parallele Anordnungen der jeweiligen Längsachsen dieser Abschnitte, können die Abmessungen des ebenen Bauteils äußerst gering gehalten werden. Dies mindert entsprechend die für das Herstellen des ebenen Bauteils erforderliche Materialfläche und somit den auftretenden Materialverschnitt, wodurch die Herstellungskosten deutlich gesenkt werden können.

Die Erfindung betrifft ferner eine Rückstellfeder für eine Scheibenbremse der vorstehend beschriebenen Art, wobei sämtliche der vorstehenden Merkmale hinsichtlich der Rückstellfeder und deren Anbringung einzeln oder in beliebiger Kombination untereinander vorgesehen sein können.

Die Erfindung wird im Folgenden beispielhaft anhand der beiliegenden Figuren beschrieben. Es stellen dar:
- Fig. 1: eine räumliche Darstellung der Scheibenbremse;
- Fig. 2: eine perspektivische Darstellung einer Führungsklammer zur Führung des Bremsbelagträgers;
- Fig. 3, 4: perspektivische Darstellungen der Führungsklammer aus Fig. 2 mit einer daran fixierten Rückstellfeder gemäß einer ersten Ausführungsform der Erfindung;
- Fig. 5: eine Einzelbilddarstellung der Rückstellfeder gemäß der ersten Ausführungsform;
- Fig. 6: eine Schnittdarstellung der Rückstellfeder aus Fig. 5 gemäß der ersten Ausführungsform;
- Fig. 7, 8: Rück- und Vorderansichten einer Kombination aus Führungsklammer und Rückstellfeder gemäß einer zweiten Ausführungsform, wobei die Blickachse der Bewegungsachse der Bremsbelaganordnung entspricht;
- Fig. 9: eine perspektivische Darstellung der Kombination aus Führungsklammer Rückstellfeder gemäß der zweiten Ausführungsform;
- Fig. 10: eine Ansicht eines ebenen Bauteils zum umformtechnischen Herstellen einer Kombination aus Rückstellfeder und Führungsklammer gemäß der zweiten Ausführungsform;
- Fig. 11: eine Ansicht eines ebenen Bauteils zum umformtechnischen Herstellen einer Kombination aus Rückstellfeder und Führungsklammer gemäß einer dritten Ausführungsform;
- Fig. 12: eine perspektivische Ansicht der aus dem ebenen Bauteil aus Figur 11 umformtechnisch hergestellte Kombination aus Führungsklammer und Rückstellfeder gemäß der dritten Ausführungsform; und
- Fig. 13: eine weitere perspektivische Ansicht der Darstellung aus Figur 12.

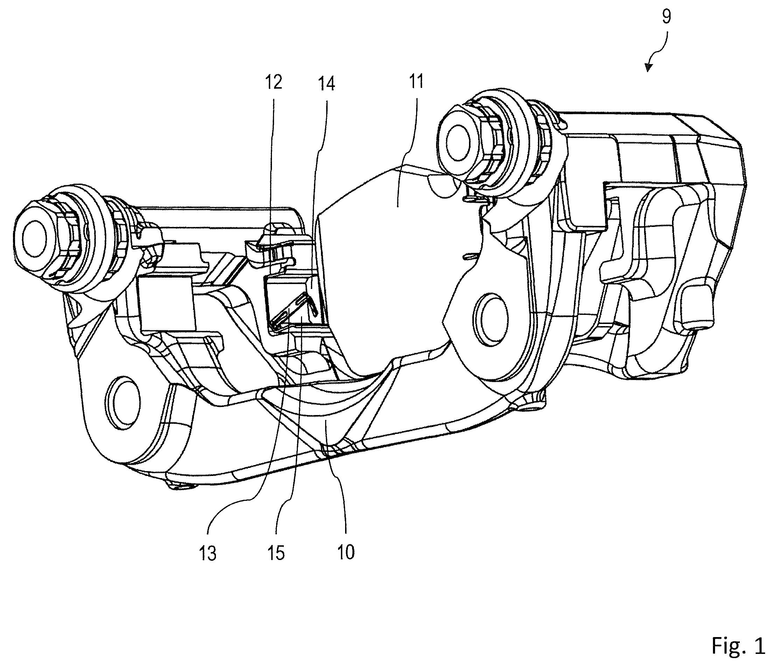

In Fig. 1 ist eine erfindungsgemäße Scheibenbremse gezeigt und allgemein mit 9 bezeichnet. Hierbei wird in einem U-förmig ausgebildeten Bremsträger 10 eine Bremsbelaganordnung 11 in einem Aufnahmeabschnitt 12 im Bremsträger 10 angeordnet und verlagerbar geführt. Innerhalb des Aufnahmeabschnitts 12 ist eine Rückstellfeder 13 angeordnet. In der gezeigten Ausführungsform ist diese im Wesentlichen innerhalb einer im Aufnahmeabschnitt 12 angeordneten Führungsklammer 15 vorgesehen. Die Rückstellfeder 13 liegt an einem seitlich auskragenden Führungsabschnitt 14 der Bremsbelaganordnung 11 an. Zum Aufbau einer Bremskraft wird die Bremsbelaganordnung 11 durch nicht weiter dargestellte Komponenten in an sich bekannter Weise im Aufnahmeabschnitt 12 bewegt. Die Rückstellfeder 13 verformt sich dabei nach Maßgabe des Verstellweges der Bremsbelaganordnung 11 entsprechend der auf sie einwirkenden Kräfte zunächst elastisch. Nach Rücknahme der auf die Bremsbelaganordnung 11 einwirkenden Betätigungskraft kann die Rückstellfeder 13 die Bremsbelaganordnung 11 durch eine elastische Rückfederung in die Ausgangsstellung, im Folgenden auch Rückstellposition genannt, zurückbewegen. Im gegenüberliegenden Bereich des Bremsträgers 10 ist hierbei eine nicht gezeigte, identische Baugruppe mit einer entsprechenden Rückstellfeder 13 angeordnet.

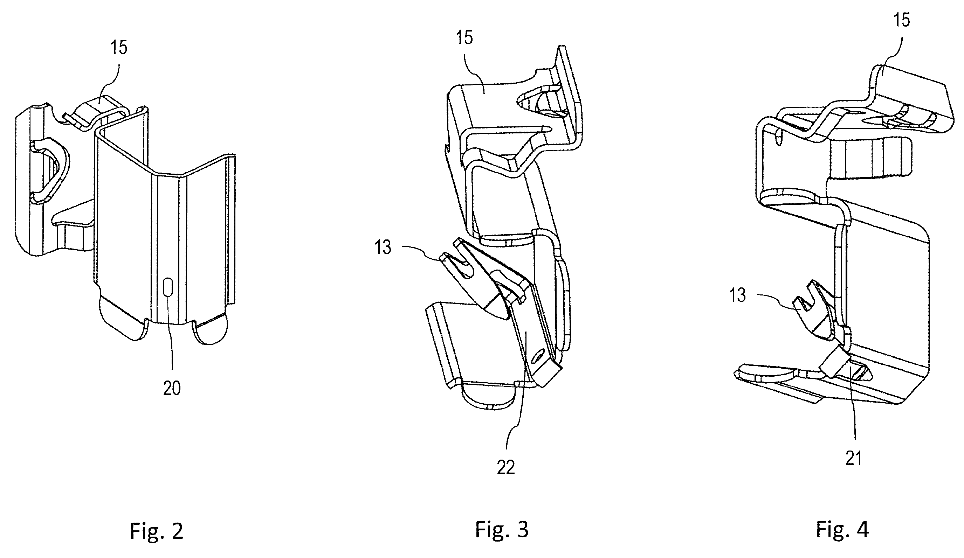

Im Verlauf der Betriebsdauer der Scheibenbremse 9 wird ein Bremsbelag, der sich auf Teilen der der Rückstellfeder 13 zugewandten Fläche der Bremsbelaganordnung 11 befindet, durch Verschleiß abgetragen. Damit das Ansprechverhalten der Scheibenbremse 9 konstant bleibt, wird ein derartiger Verschleiß typischerweise durch eine dem aktuellen Bremsbelagverschleiß entsprechende Verschleißnachstellung kompensiert. Dabei wird die Bremsbelaganordnung 11 dauerhaft in Richtung der Rückstellfeder 13 bzw. in Betätigungsrichtung vorverlagert. Die Ausgangsstellung bzw. Rückstellposition der Bremsbelaganordnung 11 soll ebenfalls an den zunehmenden Bremsbelagverschleiß bzw. an eine kompensierende Vorverlagerung der Bremsbelaganordnung 11 durch eine Verschleißnachstellung angepasst werden. Das heißt, die Ausgangsstellung bzw. Rückstellposition soll ebenfalls zur Verschleißkompensation geändert werden. Die erfindungsgemäße Rückstellfeder 13 löst diese Aufgabe der Verschleißkompensation dadurch, dass sie durch die plastische Verformung in Folge einer erhöhten Krafteinwirkung ihren Angriffspunkt an der Bremsbelaganordnung 11 im elastisch undeformierten Zustand und somit die sich einstellende Rückstellposition in Betätigungsrichtung der Bremsbelaganordnung 11 verlagert. Dieser Vorgang wird im Folgenden anhand einer in den Figuren 2 bis 6 dargestellten ersten Ausführungsform näher beschrieben. Eine erhöhte Krafteinwirkung wird beispielsweise dann erreicht, wenn aufgrund des einsetzenden Verschleißes bei einer Bremsbetätigung eine größere Bewegung der Bremsbelaganordnung 11 erfolgt und somit die Rückstellfeder 13 verstärkt deformiert wird. Diese Deformation umfasst einen reversiblen elastischen Anteil und einen bleibenden plastischen Anteil.

Fig. 2 zeigt eine Führungsklammer 15, die in den Aufnahmeabschnitten 12 des Bremsbelagträgers 10 angeordnet wird. Derartige Führungsklammern sind an sich aus dem Stand der Technik bekannt. Sie dienen dazu, die Bremsbelaganordnung im Bremsträger definiert zu führen. Für die erfindungsgemäße Scheibenbremse 9 ist zusätzlich die Ausnehmung 20 vorgesehen.

In Fig. 3 und 4 wird eine erste Ausführungsform der Rückstellfeder 13 gezeigt, die als separates Bauteil ausgebildet und an der Führungsklammer 15 fixiert ist. Dazu greift sie mittels einer Rastnase 24 in die Ausnehmung 20 der Führungsklammer 15 ein und umfasst einen Teil der Führungsklammer 15 mittels eines Klemmabschnitts 21. Dabei wirkt der Klemmabschnitt 21 derart mit einem sich daran anschließenden, gegenüberliegenden Basisabschnitt 22 zusammen, dass diese beim Aufschieben auf den Haltebereich der Führungsklammer 15 elastisch aufgeweitet werden. Somit wird die Rückstellfeder 13 an der Führungsklammer 15 festgeklemmt. Es ist alternativ möglich, dass eine derartige Fixierung der Rückstellfeder ohne Führungsklammer auch direkt am Bremsbelagträger 10 erfolgt.

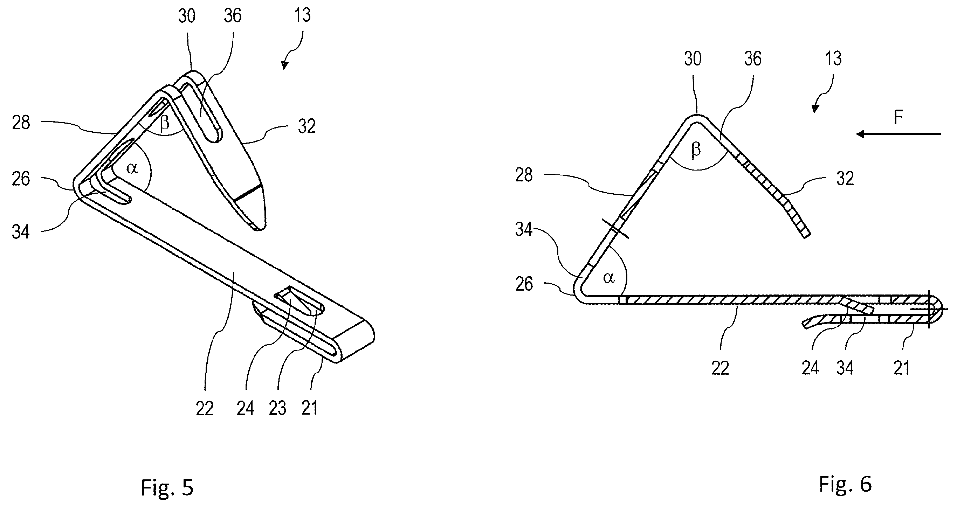

Fig. 5 zeigt eine detaillierte Darstellung der Rückstellfeder 13 gemäß der ersten Ausführungsform. Hierbei weist die Rückstellfeder den schon beschriebenen Klemmabschnitt 21 auf, der in einem Winkel von etwa 180° in den Basisabschnitt 22 übergeht, so dass diese beiden Abschnitte im Wesentlichen parallel zueinander verlaufen. Im Basisabschnitt 22 ist eine Ausnehmung 23 vorgesehen, von der eine Rastnase 24 in Richtung des Klemmabschnitts 21 vorsteht. An den Basisabschnitt 22 schließt sich durch einen ersten Verbindungsbereich 26 ein erster Schenkel 28 an. Dieser geht durch einen Verbindungsbereich 30 in einen zweiten Schenkel 32 über. Die Übergänge vom Basisabschnitt 22 zum Schenkel 28 sowie zwischen den Schenkeln 28 und 32 sind jeweils durch Winkel α und β gekennzeichnet, welche durch ein Biegen der Schenkel 28 und 32 in Richtung der dem Klemmabschnitt 21 abgewandten Seite des Basisabschnitts 22 aus einem zunächst ebenen Blech entstehen. Die entstehenden Übergänge sind hierbei bewusst harmonisch und nicht etwa scharfkantig gestaltet, um Spannungsspitzen zu vermeiden.

Fig. 6 zeigt eine Schnittansicht der Rückstellfeder 13, wobei die Schnittachse parallel zur Bewegungsrichtung der Bremsbelaganordnung 11 verläuft. Die sich gegenüberliegenden Abschnitte 21 und 22 gehen hierbei derart ineinander über, dass der Abstand zwischen ihnen geringer ist, als die Materialdicke eines entsprechenden Gegenstücks (Bereich einer Führungsklammer 15 oder des Bremsbelagträgers 10). Demzufolge werden diese Abschnitte bei einem Aufschieben auf das entsprechende Gegenstück elastisch aufgeweitet und klemmen die Rückstellfeder 13 daran fest. Gegenüber der Rastnase 24 ist im Klemmabschnitt 21 eine Ausnehmung 34 vorgesehen, so dass die Rastnase durch eine Ausnehmung im Gegenstück, auf das die Rückstellfeder 13 aufgeschoben wird (beispielsweise Ausnehmung 20 der Führungsklammer 15), hindurchragt und somit teilweise in die Ausnehmung 34 eingreift.

Wie in Fig. 5 und 6 ersichtlich, sind die Übergangsbereiche 26 und 30 jeweils durch Ausnehmungen 34, 36 gekennzeichnet. Diese Ausnehmungen ragen auch in die sich unmittelbar anschließenden Bereiche der Schenkel 28, 32 bzw. des Basisabschnitts 22 hinein. Im Übrigen sind die Schenkel 28, 32 jedoch frei von Ausnehmungen und im Wesentlichen geradlinig gestaltet. Die Ausnehmungen 34, 36 stellen Gestaltungsmerkmale dar, durch welche die Verbindungsbereiche 26, 32 gezielt geschwächt werden. Dadurch werden die Deformationsgrenzen bestimmt, welche für den jeweiligen Verbindungsbereich 26, 30 den Übergang von elastischer zu plastischer Deformation in Abhängigkeit der einwirkenden Kräfte festlegen. Die Ausnehmungen 34, 36 sind im gezeigten Fall derart dimensioniert, dass sich je Verbindungsbereich unterschiedliche Deformationsgrenzen einstellen. Bei der gezeigten Ausführungsform ist die Deformationsgrenze des Verbindungsbereichs 30 geringer gewählt als die des Bereiches 26. Es versteht sich, dass damit auch der Grad der elastischen Deformation im Verbindungsbereich 30 zunächst größer ist, also der des Verbindungsbereichs 26.

Unter Einwirkung einer Kraft F gemäß dem Pfeil F in Fig. 6 bei Betätigung der Scheibenbremse 9, also bei einem Bewegen der Bremsbelaganordnung 11 in Richtung des Pfeils F, wird daher der Winkel β zwischen den Schenkeln 28 und 32 verkleinert. Eine Zunahme der Kraft F, beziehungsweise eine stärkere Deformation der Rückstellfeder 13 in Folge eines zunehmenden Belagverschleißes, führt dazu, dass die Deformationsgrenze des Verbindungsbereichs 30 überschritten wird. Dadurch wird der Winkel β zwischen den Schenkeln 28 und 32 in Folge der plastischen Deformation der Rückstellfeder 13 dauerhaft verkleinert. Demzufolge wird auch der Angriffspunkt des Schenkels 32 an der Bremsbelaganordnung 11 in Richtung des Pfeils F verlagert. Die Rückstellposition der Bremsbelaganordnung, die sich in Folge einer elastischen Entspannung der Rückstellfeder 13 einstellt, verlagert sich also ebenso in Betätigungsrichtung entsprechend der plastischen Deformation, die durch den kompensierten Belagverschleiß bestimmt ist. Dieser Effekt wird verstärkt, wenn auch die Deformationsgrenze des Verbindungsbereichs 26 überschritten wird. Dies geschieht im gezeigten Fall erst, wenn der Schenkel 32 zu dem Schenkel 28 hin plastisch deformiert wurde. Anschließend kommt es zu einem plastischen Deformationsverhalten zur Verschleißkompensation, bei dem sich zeitlich parallel der Winkel α vergrößert und der Winkel β verkleinert, bis sich die beiden Schenkel 28 und 32 schließlich im Betätigungsfall aneinanderlegen. Eine weitere plastische Deformation findet in der Regel nicht statt. Es können somit wenigstens zwei definierte Grenzen vorgesehen werden, bei denen sich die Rückstellfeder 13 zur Kompensation von Bremsbelagverschleiß plastisch deformiert.

Es ist anzumerken, dass die Rückstellfeder 13 in Folge einer solchen Deformation im Wesentlichen ihr elastisches Rückfederungsvermögen beibehält und damit auch der Betrag des Rückstellweges im Wesentlichen konstant bleibt. Lediglich der Angriffspunkt der Rückstellfeder 13 an der Bremsbelaganordnung 11 und somit die absolute Position der Bremsbelaganordnung 11 nach einer erfolgten Rückstellung verändern sich verschleißbedingt, in dem sie in Betätigungsrichtung verlagert werden.

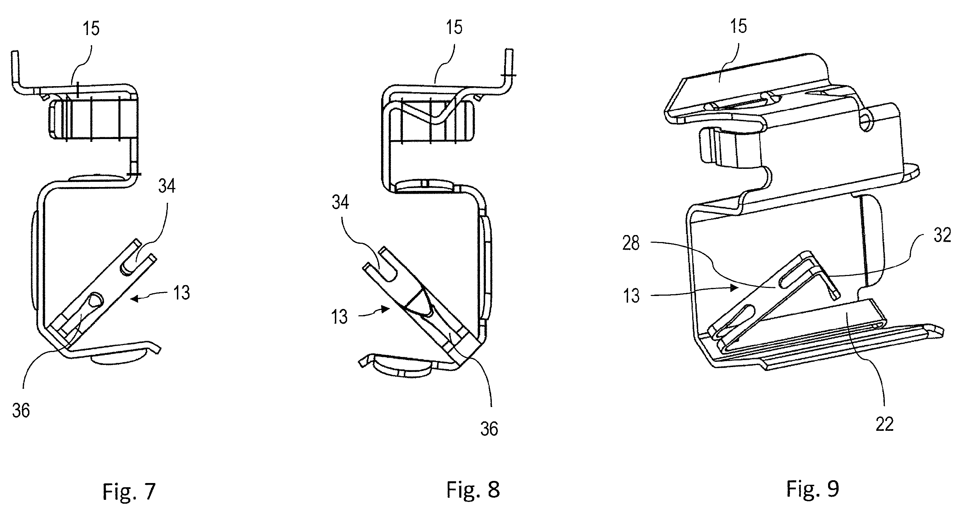

In den Fig. 7 bis 9 ist eine zweite Ausführungsform der Rückstellfeder 13 gezeigt, wobei im Vergleich zur ersten Ausführungsform gleichartige oder gleichwirkende Komponenten mit denselben Bezugszeichen versehen sind.

Der wesentliche Unterschied besteht darin, dass die Rückstellfeder 13 nicht als separates Bauteil gestaltet ist, sondern einstückig an der Führungsklammer 15 angeformt ist. Die Fixierungsmechanismen mittels der Rastnase 24 sowie des Klemmabschnitts 21 entfallen somit. Die für das Federungsverhalten maßgeblichen Elemente sowie die die Deformationsgrenzen definierenden Ausnehmungen 34 und 36 bleiben jedoch bestehen. Die Feder ist hierbei zunächst flächig ausgebildet und wird dann in den Basisabschnitt 22 sowie die Schenkel 28, 32 umgebogen.

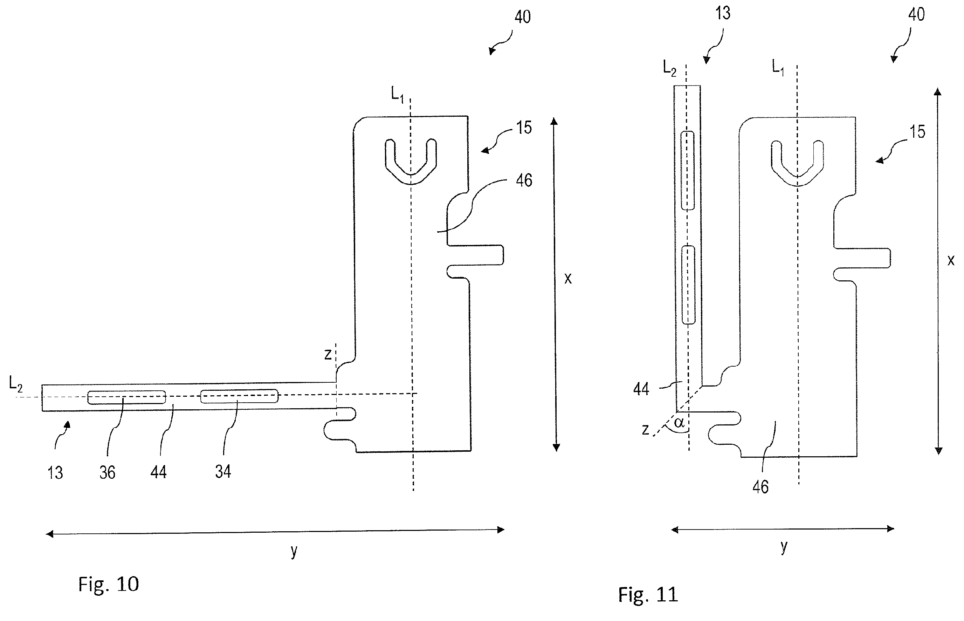

Bei der zweiten Ausführungsform werden die Rückstellfeder 13 und die Führungsklammer 15 aus einem gemeinsamen, zunächst ebenen Bauteil umformtechnisch hergestellt. Dieses ebene Bauteil ist in Figur 10 gesondert dargestellt und mit 40 bezeichnet. Man erkennt, dass die Rückstellfeder 13 und Führungsklammer 15 zunächst als im Wesentlichen längliche Abschnitte 44 und 46 des Bauteils 40 ausgebildet sind. Dabei weisen die jeweiligen Abschnitte 44 und 46 bereits größtenteils die grundlegenden Konturen und Ausnehmungen entsprechend der in den Figuren 7 bis 9 fertig hergestellten Kombination aus Rückstellfeder 13 und Führungsklammer 15 auf. So erkennt man beispielsweise die vorstehend geschilderten Ausnehmungen 34 und 36 in dem Abschnitt 44.

Zum Herstellen der Einheit aus Rückstellfeder 13 und Führungsklammer 15 gemäß der zweiten Ausführungsform, wird das ebene Bauteil 40 um mehrere Biegeachsen umgebogen, deren Lage sich in Zusammenschau mit dem in Figuren 7 bis 9 gezeigten, fertig umgeformten Bauteil nachvollziehen lässt. Es versteht sich, dass dabei beispielsweise im Rahmen von kombinierten Stanz-/ Biegeprozessen auch weitere Änderungen an der Kontur vorgenommen werden können oder noch weitere Ausnehmungen eingebracht werden können.

Im in Figur 10 gezeigten ebenen Zustand erkennt man, dass die Abschnitte 44 und 46, aus denen später die Führungsklammer 15 und Rückstellfeder 13 geformt werden, sich entlang einer jeweiligen Längsachse L₁ und L₂ erstrecken. Dabei erstreckt sich der längliche Abschnitt 44 bzw. dessen Längsachse L₁ quer zu der Längsachse L₂ des länglichen Abschnitts 46. Beim Umformen des Bauteils 40 wird daher der Abschnitt 44 relativ zum Abschnitt 46 insbesondere um eine in Fig. 10 mit z markierte Biegeachse umgebogen, welche quer zur Längsachse L₁ des Abschnitts 44 verläuft. Man erkennt ferner, dass das ebene Bauteil 40 zwei Hauptabmessungen y und x aufweist, welche maßgeblich eine Materialfläche an Blech definieren, die zum Herstellen des Bauteils 40 benötigt wird. Dabei wird aus Fig. 10 ersichtlich, dass das Bauteil 40 lediglich einen relativ geringen Anteil an der aufgespannten Materialfläche einnimmt, wodurch der Materialverschnitt, der bei einem Ausschneiden oder Ausstanzen des Bauteils 40 aus dieser Fläche auftritt, relativ hoch ausfällt.

Im Vergleich dazu zeigt Figur 11 eine alternative Ausgestaltung eines ebenen Bauteils 40 gemäß einer dritten Ausführungsform der Erfindung. In diesem Fall sind die länglichen Abschnitte 44 und 46 für sich genommen gleichartig zu dem Beispiel in Figur 10 ausgebildet. Jedoch sind bei dieser Ausführungsform die Längsachsen L₁ und L₂ parallel zueinander ausgerichtet. Entsprechend erstrecken sich die Flächenabschnitte 44 und 46 im Wesentlichen in einer gemeinsamen Richtung und die aufgespannte erforderliche Materialfläche fällt insbesondere in der Querrichtung y geringer aus als bei dem vorigen Beispiel aus Fig. 10. Somit nimmt das Bauteil 40 gemäß der dritten Ausführungsform einen vergleichsweise hohen Anteil an der aufgespannten Materialfläche ein und der Verschnitt fällt deutlich geringer aus.

Die Biegeachse z, um die der Flächenabschnitt 44 relativ zum Abschnitt 46 umgebogen wird, erstreckt sich bei dieser Ausführungsform in einem Winkel α von 45° relativ zur Längsachse L₁ des Flächenabschnitts 44. Dies ermöglicht, dass die Rückstellfeder 13 auch bei der dritten Ausführungsform gleichartig relativ zu der Führungsklammer 15 und der Betätigungsrichtung ausgerichtet ist, wie bei den vorstehend diskutierten Beispielen.

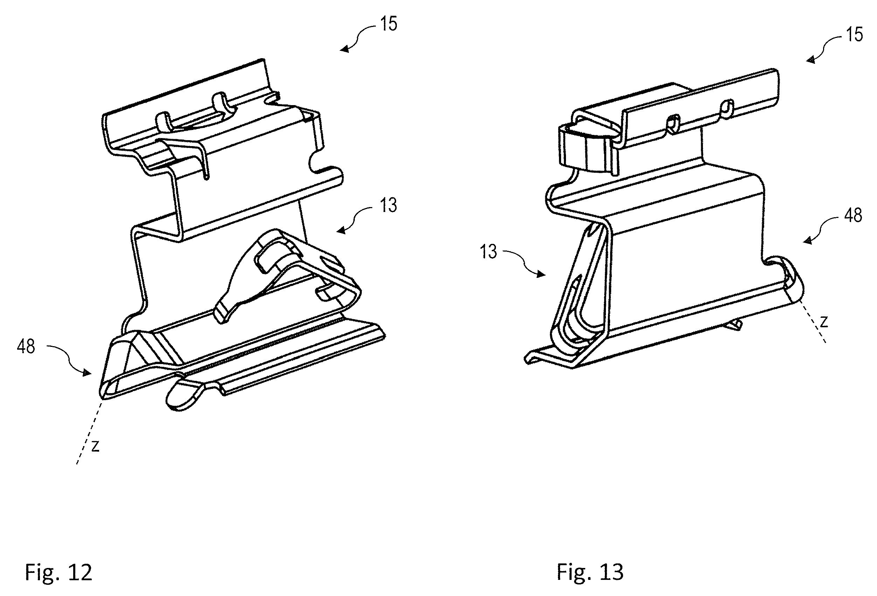

Eine fertig umgeformte Einheit gemäß der dritten Ausführungsform ist in den Figuren 12 und 13 gezeigt. Man erkennt wiederum die schräg verlaufende Biegeachse z und die sich daran anschließenden Abschnitte der Rückstellfeder 13. Um die Steifigkeit des umgebogenen Bereiches um die Biegeachse z zu erhöhen und um lokale Spannungskonzentrationen zu vermeiden, ist die Rückstellfeder in diesem Bereich mit einer Wölbung 48 ausgebildet, welche ebenfalls im Rahmen des Umformprozesses hergestellt wird.

## Patentansprüche

1. Scheibenbremse (9) für eine Kraftfahrzeugbremsanlage mit
- einem Bremsträger (10), der wenigstens einen Aufnahmebereich (12) aufweist,
- eine Bremsbelaganordnung (11), die einen Bremsbelagträger und einen an dem Bremsbelagträger angebrachten Bremsbelag aufweist, der zum Erzielen einer Bremswirkung mit einer Bremsscheibe in Wechselwirkung bringbar ist, wobei die Bremsbelaganordnung (11) über einen am Bremsbelagträger ausgebildeten Führungsabschnitt (14) in dem wenigstens einen Aufnahmebereich geführt aufgenommen ist, und
- wenigstens eine Rückstellfeder (13), die an der Bremsbelaganordnung (11) angreift und die Bremsbelaganordnung (11) unter elastischer Deformation in eine bremswirkungsfreie Ausgangsstellung vorspannt,
wobei die wenigstens eine Rückstellfeder (13) zur Kompensation von Bremsbelagverschleiß plastisch deformierbar ist,
wobei sich die Rückstellfeder (13) über einen Basisabschnitt (22) an dem Bremsträger (10) abstützt und wenigstens einen über einen Verbindungsbereich (26, 30) mit dem Basisabschnitt verbundenen, im Winkel (α) zu diesem angeordneten Schenkel (28, 32) aufweist, wobei sich der Winkel (α) bei zunehmendem Bremsbelagverschleiß unter plastischer Deformation ändert,
**dadurch gekennzeichnet, dass** die Rückstellfeder (13) derart zwischen dem Bremsträger (10) und der Bremsbelaganordnung (11) angeordnet ist, dass sie auf Druck belastet wird, wobei sich bei zunehmendem Bremsbelagverschleiß der Winkel (α) zwischen dem wenigstens einen Schenkel (28, 32) und dem Basisabschnitt (22) unter plastischer Deformation vergrößert.

2. Scheibenbremse (9) nach Anspruch 1,
**dadurch gekennzeichnet, dass** die Rückstellfeder wenigstens zwei miteinander verbundene, im Winkel (β) zueinander angeordnete Schenkel (28, 32) aufweist, wobei sich der Winkel (β) bei zunehmendem Bremsbelagverschleiß unter plastischer Deformation ändert.

3. Scheibenbremse (9) nach Anspruch 2,
**dadurch gekennzeichnet, dass** die Rückstellfeder (13) derart zwischen dem Bremsträger (10) und der Bremsbelaganordnung (11) angeordnet sind, dass sie auf Druck belastet ist, wobei bei zunehmendem Bremsbelagverschleiß sich der Winkel (β) zwischen den benachbarten Schenkeln unter plastischer Deformation verkleinert und sich die wenigstens zwei Schenkel (28, 32) einander annähern.

4. Scheibenbremse (9) nach Anspruch 2 oder 3,
**dadurch gekennzeichnet, dass** die Rückstellfeder (13) im Verbindungsbereich (26, 30) zwischen zwei benachbarten Schenkeln (28, 32) sowie nahe dem Verbindungsbereich (26, 30) jeweils mit einer Ausnehmung (34, 36) versehen ist, wobei die Schenkel (28, 32) entfernt von dem Verbindungsbereich (28, 32) ausnehmungsfrei gestaltet sind.

5. Scheibenbremse (9) nach Anspruch 4,
**dadurch gekennzeichnet, dass** die gewünschte Deformationsgrenze des Verbindungsbereichs (26, 30) zwischen elastischer und plastischer Verformung durch Dimensionierung der Größe der Ausnehmung (34, 36) im Verbindungsbereich (26, 30) bestimmt ist.

6. Scheibenbremse (9) nach einem der vorangehenden Ansprüche,
**dadurch gekennzeichnet, dass** der Verbindungsbereich (26) des mit dem Basisabschnitt verbundenen Schenkels (28) eine andere Deformationsgrenze aufweist als der Verbindungsbereich (30) zwischen benachbarten Schenkeln (28, 32).

7. Scheibenbremse (9) nach einem der vorangehenden Ansprüche,
**dadurch gekennzeichnet, dass** die Verbindungsbereiche (26, 30) zwischen benachbarten Schenkeln (28, 32) mit zunehmendem Abstand vom Basisabschnitt (22) mit betragsmäßig ungleicher, vorzugsweise betragsmäßig abnehmender, Deformationsgrenze ausgebildet sind.

8. Scheibenbremse (9) nach einem der vorangehenden Ansprüche,
**dadurch gekennzeichnet, dass** der wenigstens eine Verbindungsbereich (26, 30) im Wesentlichen harmonisch gerundet ausgebildet ist.

9. Scheibenbremse (9) nach einem der vorangehenden Ansprüche,
**dadurch gekennzeichnet, dass** der wenigstens eine Schenkel (28, 32) im Wesentlichen geradlinig ausgebildet sind.

10. Scheibenbremse (9) nach einem der vorangehenden Ansprüche,
**dadurch gekennzeichnet, dass** die Rückstellfeder (13) als separates Bauteil ausgebildet und relativ zum Bremsträger (10), vorzugsweise über eine Rastverbindung oder eine Clip-Verbindung festlegbar ist.

11. Scheibenbremse (9) nach einem der vorangehenden Ansprüche,
**dadurch gekennzeichnet, dass** die Rückstellfeder (13) an einer Führungsklammer (15) zur Führung des Bremsbelagträgers (11) angebracht ist, die in dem Aufnahmebereich (12) aufgenommen ist.

12. Scheibenbremse (9) nach Anspruch 10 und 11,
**dadurch gekennzeichnet, dass** die Rückstellfeder (13) an der Führungsklammer (15) über eine Rastverbindung verrastet und/oder verklemmt ist, wobei die Führungsklammer (15) hierfür eine Ausnehmung (20) aufweist.

13. Scheibenbremse (9) nach Anspruch 10 und 11,
**dadurch gekennzeichnet, dass** die Rückstellfeder (13) an der Führungsklammer (15) einstückig angeformt ist.

14. Scheibenbremse (9) nach Anspruch 13,
**dadurch gekennzeichnet, dass** die Einheit aus Rückstellfeder (13) und Führungsklammer (15) durch Umformen eines ebenen Bauteils (40) hergestellt wird, wobei die Rückstellfeder (13) und die Führungsklammer (15) jeweils durch Umformen eines im ebenen Zustand im Wesentlichen länglichen Abschnittes (44, 46) des ebenen Bauteils (40) hergestellt werden, wobei die jeweiligen Längsachsen (L₁, L₂) der länglichen Abschnitte (44,46) im Wesentlichen parallel zueinander verlaufen.

15. Rückstellfeder (13) für eine Scheibenbremse (9) nach einem der vorangehenden Ansprüche, die an der Bremsbelaganordnung (11) angreift und die Bremsbelaganordnung (11) unter elastischer Deformation in eine bremswirkungsfreie Ausgangsstellung vorspannt, wobei die Rückstellfeder (13) zur Kompensation von Bremsbelagverschleiß plastisch deformierbar ist,
**dadurch gekennzeichnet, dass** sich die Rückstellfeder (13) über einen Basisabschnitt (22) an dem Bremsträger (10) abstützt und wenigstens einen über einen Verbindungsbereich (26, 30) mit dem Basisabschnitt verbundenen, im Winkel (α) zu diesem angeordnete Schenkel (28, 32) aufweist, wobei sich der Winkel (α) bei zunehmendem Bremsbelagverschleiß unter plastischer Deformation ändert.

## Claims

1. A disc brake (9) for a motor vehicle brake system comprising:
- a brake support (10) which has at least one receiving region (12),
- a brake lining arrangement (11) which has a brake lining support and a brake lining attached to the brake lining support and which can be brought intro interaction with a brake disc in order to achieve a braking effect, wherein the brake lining arrangement (11) is received in the at least one receiving region in a guided manner via a guiding portion (14) formed on the brake lining support, and
- at least one restoring spring (13) which engages the brake lining arrangement (11) and biases the brake lining arrangement (11) under elastic deformation into a starting position that does not produce a braking effect,
wherein the at least one restoring spring (13) can be plastically deformed in order to compensate for brake lining wear,
wherein the restoring spring (13) rests against the brake support (10) via a base portion (22) and has at least one limb (28, 32) which is connected to the base portion via a connecting region (26, 30) and which is arranged at a first angle (α) relative to the base portion, the first angle (α) changing under the effect of plastic deformation as the brake lining wear increases,
**characterized in that** the restoring spring (13) is disposed in such a way between the brake support (10) and the brake lining arrangement (11) that the restoring spring is subject to compression loading, wherein with increasing brake lining wear the first angle (α) between the at least one limb (28, 32) and the base portion (22) increases under the effect of plastic deformation.

2. The disc brake (9) according to claim 1,
**characterized in that** the restoring spring has at least two limbs (28, 32), which are connected to one another and disposed at an angle (β) to one another, wherein the angle (β) changes under the effect of plastic deformation as the brake lining wear increases.

3. The disc brake (9) according to claim 2,
**characterized in that** the restoring spring (13) is disposed in such a way between the brake support (10) and the brake lining arrangement (11) that the restoring spring is subject to compression loading, wherein with increasing brake lining wear the angle
(β) between the adjacent limbs reduces under the effect of plastic deformation and the at least two limbs (28, 32) move closer to one another.

4. The disc brake (9) according to claim 2 or 3,
**characterized in that** the restoring spring (13) in the connecting region (26, 30) between two adjacent limbs (28, 32) as well as close to the connecting region (26, 30) is provided with a recess (34, 36), respectively, wherein the limbs (28, 32) remote from the connecting region (28, 32) are of a recess-free design.

5. The disc brake (9) according to claim 4,
**characterized in that** the desired deformation limit of the connecting region (26, 30) between elastic and plastic deformation is determined by dimensioning the size of the recess (34, 36) in the connecting region (26, 30).

6. The disc brake (9) according to any of the preceding claims,
**characterized in that** the connecting region (26) of the limb (28) connected to the base portion has a different deformation limit than the connecting region (30) between adjacent limbs (28, 32).

7. The disc brake (9) according to any of the preceding claims,
**characterized in that** the connecting regions (26, 30) between adjacent limbs (28, 32) with increasing spacing from the base portion (22) are configured with a deformation limit of unequal value, preferably decreasing in terms of amount.

8. The disc brake (9) according to any of the preceding claims,
**characterized in that** the at least one connecting region (26, 30) is of a substantially harmonically rounded construction.

9. The disc brake (9) according to any of the preceding claims,
**characterized in that** the at least one limb (28, 32) is of a substantially rectilinear configuration.

10. The disc brake (9) according to any of the preceding claims,
**characterized in that** the restoring spring (13) takes the form of a separate component and is fastenable relative to the brake support (10), preferably via a snack-lock connection or a clip-in connection.

11. The disc brake (9) according to any of the preceding claims,
**characterized in that** the restoring spring (13) is attached to a guide clip (15) for guiding the brake lining support (11), which guide clip is accommodated in the receiving region (12).

12. The disc brake (9) according to claims 10 and 11,
**characterized in that** the restoring spring (13) is latched and/or clamped on the guide clip (15) by means of a detent connection, wherein the guide clip (15) therefor has a receiving region (20).

13. The disc brake (9) according to claims 10 and 11,
**characterized in that** the restoring spring (13) is formed integrally on the guide clip (15).

14. The disc brake (9) according to claim 13,
**characterized in that** the restoring spring (13) and guide clip (15) is manufactured by shaping a flat component (40), wherein the restoring spring (13) and the guide clip (15) are manufactured by shaping an, in the flat state, substantially elongate portion (44, 46) of the flat component (40), respectively, wherein the respective longitudinal axes (L₁, L₂) of the elongate portions (44, 46) run substantially parallel to one another.

15. Restoring spring (13) for a disc brake (9) according to one of the preceding claims, which engages the brake lining arrangement (11) and biases the brake lining arrangement (11) under elastic deformation into a starting position that does not produce a braking effect, wherein the restoring spring (13) can be plastically deformed in order to compensate for brake lining wear,
**characterized in that** the restoring spring (13) rests against the brake support (10) via a base portion (22) and has at least one limb (28, 32) and which is arranged at an angle (α) relative to said base portion, said angle (α) changing under the effect of plastic deformation as the brake lining wear increases.

## Revendications

1. Frein à disque (9) pour un système de freinage de véhicule, comprenant
- un support de frein (10) présentant au moins une zone de logement (12),
- un système de garniture de frein (11) qui présente un support de garniture de frein et une garniture de frein qui est montée sur le support de garniture de frein et qui peut interagir avec un disque de frein afin d'obtenir un effet de freinage, ce système de garniture de frein (11) étant logé dans ladite au moins une zone de logement de manière guidée par un segment de guidage (14) réalisé sur le support de garniture de frein, et
- au moins un ressort de rappel (13) qui vient en prise sur le système de garniture de frein (11) et qui précontraint le système de garniture de frein (11) par déformation élastique dans une position de départ sans effet de freinage,
ledit au moins un ressort de rappel (13) étant plastiquement déformable pour compenser l'usure de la garniture du frein,
le ressort de rappel (13) s'appuyant sur le support de frein (10) par l'intermédiaire d'une partie de base (22) et présentant au moins une branche (28, 32) reliée par une zone de liaison (26, 30) à ladite partie de base et disposée de manière à former un angle (α) par rapport à celle-ci, l'angle (α) changeant par déformation plastique à mesure qu'augmente l'usure de la garniture de frein,
**caractérisé en ce que** le ressort de rappel (13) est disposé de telle manière entre le support de frein (10) et le système de garniture de frein (11) qu'il est sollicité en pression, l'angle (α) entre ladite au moins une branche (28, 32) et la partie de base (22) s'agrandissant par déformation plastique à mesure qu'augmente l'usure de la garniture de frein.

2. Frein à disque (9) selon la revendication 1,
**caractérisé en ce que** le ressort de rappel présente au moins deux branches (28, 32) reliées l'une à l'autre et disposées de manière à former un angle (β) l'une par rapport à l'autre, cet angle (β) changeant par déformation plastique à mesure qu'augmente l'usure de la garniture de frein.

3. Frein à disque (9) selon la revendication 2,
**caractérisé en ce que** le ressort de rappel (13) est disposé de telle manière entre le support de frein (10) et le système de garniture de frein (11) qu'il est sollicité en pression, l'angle (β) diminuant par déformation plastique à mesure qu'augmente l'usure de la garniture de frein et lesdites au moins deux branches (28, 32) se rapprochant l'une de l'autre.

4. Frein à disque (9) selon la revendication 2 ou 3,
**caractérisé en ce que** le ressort de rappel (13) est pourvu d'un évidement (34, 36) dans et à proximité de la zone de liaison (26, 30) entre deux branches contiguës (28, 32), les branches (28, 32) étant conçues sans évidement, à distance de la zone de liaison (28, 32).

5. Frein à disque (9) selon la revendication 4,
**caractérisé en ce que** la limite de déformation souhaitée entre la déformation élastique et la déformation plastique de la zone de liaison (26, 30) est déterminée par le dimensionnement de la taille de l'évidement (34, 36) réalisé dans la zone de liaison (26, 30).

6. Frein à disque (9) selon l'une des revendications précédentes,
**caractérisé en ce que** la zone de liaison (26, 30) de la branche (28) reliée à la partie de base présente une limite de déformation autre que celle de la zone de liaison (30) située entre des branches contiguës (28, 32).

7. Frein à disque (9) selon l'une des revendications précédentes,
**caractérisé en ce que** les zones de liaison (26, 30) entre des branches contiguës (28, 32) sont réalisées avec une limite de déformation différente en valeur, préférentiellement décroissante en valeur, à distance croissante de la partie de base (22).

8. Frein à disque (9) selon l'une des revendications précédentes,
**caractérisé en ce que** ladite au moins une zone de liaison (26, 30) est réalisée de manière sensiblement harmonieusement incurvée.

9. Frein à disque (9) selon l'une des revendications précédentes,
**caractérisé en ce que** ladite au moins une branche (28, 32) est réalisée de manière sensiblement rectiligne.

10. Frein à disque (9) selon l'une des revendications précédentes,
**caractérisé en ce que** le ressort de rappel (13) est réalisé sous la forme d'une pièce séparée pouvant être fixée par rapport au support de frein (10), préférentiellement par le biais d'une liaison par encliquetage ou par clip.

11. Frein à disque (9) selon l'une des revendications précédentes,
**caractérisé en ce que** le ressort de rappel (13) est monté sur un clip de guidage (15) destiné au guidage du support de garniture de frein (11), lequel clip est logé dans la zone de logement (12).

12. Frein à disque (9) selon la revendication 10 et la revendication 11,
**caractérisé en ce que** le ressort de rappel (13) est monté sur ledit clip de guidage (15) par l'intermédiaire d'une liaison par encliquetage et/ou par serrage, le clip de guidage (15) présentant pour ce faire un évidement (20).

13. Frein à disque (9) selon la revendication 10 et la revendication 11,
**caractérisé en ce que** le ressort de rappel (13) est réalisé d'un seul tenant avec le clip de guidage (15).

14. Frein à disque (9) selon la revendication 13,
**caractérisé en ce que** l'unité constituée par le ressort de rappel (13) et par le clip de guidage (15) est obtenue par déformation d'une pièce (40) plane, le ressort de rappel (13) et le clip de guidage (15) étant respectivement obtenus par déformation d'une partie (44, 46) sensiblement allongée à l'état plan de la pièce (40) plane, les axes longitudinaux (L₁, L₂) respectifs des parties allongées (44, 46) s'étendant sensiblement parallèlement les uns par rapport aux autres.

15. Ressort de rappel (13) pour frein à disque (9) selon l'une des revendications précédentes, lequel ressort vient en prise sur le système de garniture de frein (11) et précontraint le système de garniture de frein (11) par déformation élastique dans une position de départ sans effet de freinage, le ressort de rappel (13) étant plastiquement déformable pour compenser l'usure de la garniture du frein,
**caractérisé en ce que** le ressort de rappel (13) s'appuie sur le support de frein (10) par l'intermédiaire d'une partie de base (22) et présente au moins une branche (28, 32) reliée par une zone de liaison (26, 30) à la partie de base (22) et disposée de manière à former un angle (α) par rapport à celle-ci, l'angle (α) changeant par déformation plastique à mesure qu'augmente l'usure de la garniture de frein,
